# EUROPEAN PATENT SPECIFICATION

(11) **EP 4 428 679 B1**
(45) Date of publication and mention of the grant of the patent: **18.11.2026**
(21) Application number: 24164618.1
(22) Date of filing: 19.03.2024
(51) Int. Cl.: G06F 8/61, G06F 8/33

(54) **TECHNIQUES FOR IMPLEMENTING A SOFTWARE APPLICATION MANAGEMENT FRAMEWORK**
VERFAHREN ZUR IMPLEMENTIERUNG EINES SOFTWAREANWENDUNGSVERWALTUNGSRAHMENS
TECHNIQUES DE MISE EN OEUVRE D'UN CADRE DE GESTION D'APPLICATION LOGICIELLE

(30) Priority: 24.01.2024 US 202463624786 P; 25.01.2024 US 202463625248 P
(43) Date of publication of application: 11.09.2024
(73) Proprietor: Apple Inc., Cupertino, CA 95014 (US)
(72) Inventor: DUNLEVIE, Robert W., Cupertino, CA 95014 (US); ROCHA, Austin C., Cupertino, CA 95014 (US); MOLAKALAPALLI, Mahesh, Cupertino, CA 95014 (US); MARTYNOV, Maxim, Cupertino, CA 95014 (US); DAS, Rishav B., Cupertino, CA 95014 (US); KISTNER, Nicholas, Cupertino, CA 95014 (US)
(74) Representative: Lang, Johannes

(56) References cited:
- US-A1- 2009 259 990
- US-A1- 2020 034 133
- US-A1- 2021 026 625

## Description

### FIELD

The described embodiments set forth techniques for implementing a software application management (SAM) framework. In particular, the techniques involve managing software application installation events across computing devices using the SAM framework.

### BACKGROUND

Recent years have shown a proliferation of software applications designed to operate on computing devices such as desktops, laptops, tablets, mobile phones, and wearable devices. The increase is primarily attributable to computing devices running operating systems that enable third-party applications to be developed for and installed on the computing devices (alongside various "native" applications that typically ship with the operating systems). This approach provides innumerable benefits, not least of which includes enabling the vast number of worldwide developers to exercise their creativity by using powerful application programming interfaces (APIs) that are available through the aforementioned operating systems.

Different approaches can be utilized to enable users to install third-party software applications on their computing devices. For example, one approach involves an environment that is, for the most part, unrestricted in that developers are able to write software applications capable of accessing virtually every corner of the operating systems / computing devices onto which they will ultimately be installed. Under this approach, users typically also are able to freely download and install the software applications from any developer and/or distributor. In one light, this approach provides developers and users a considerably high level of flexibility in that they are able to participate in an operating environment that is largely uninhibited. At the same time, this approach is rife with security drawbacks in that faulty, malicious, etc., software applications are pervasive and commonly installed by unassuming users.

To mitigate the foregoing deficiencies, an alternative approach involves implementing an environment that is more restricted in comparison to the foregoing unrestricted environments. In particular, a restricted environment typically involves a software application store that is implemented by an entity that (typically) is also linked to the operating systems and/or computing devices onto which the software applications ultimately will be installed. Under this approach, developers are required to register with the software application store as a first line of vetting. In turn, the developers submit proposed software applications to the software application store for an analysis as to whether the software applications conform to various operating requirements, which constitutes a second line of vetting. Ultimately, when a software application is approved for distribution through the software application store, users are permitted to download the software application onto their computing devices. Accordingly, this approach affords the benefit of considerable security enhancements in comparison to the aforementioned unrestricted environments.

Regardless of which approach, environment, etc., is utilized, it can be beneficial to customers, developers, etc., to maintain a comprehensive view of installation events that take place in association with software applications. Accordingly, what is needed are techniques for enabling comprehensive views of installation events to be formed, maintained, and so on.

US 2021/026625 A1 relates to the management of information handling systems and to a corresponding device experience application launcher.

### SUMMARY

The invention is defined by the appended independent claims. The dependent claims define advantageous embodiments. The described embodiments set forth techniques for implementing a software application management (SAM) framework. In particular, the techniques involve managing software application installation events across computing devices using the SAM framework.

One embodiment sets forth a method for managing software application installation events. According to some embodiments, the method can be implemented by a software application management (SAM) framework implemented on a computing device, and includes the steps of (1) detecting, on the computing device, an installation event associated with a software application, (2) gathering information about the installation event, wherein the information includes: first data that uniquely identifies the software application, and second data that is based on the installation event, and (3) providing the information to a management entity to cause the management entity to take action on, or to disregard, the installation event, based on whether the installation event satisfies at least one criterion.

Another embodiment sets forth a method for managing software application installation events. According to some embodiments, the method can be implemented by a management entity implemented on at least one server device, and includes the steps of (1) causing a computing device to detect installation events associated with software applications on the computing device, (2) receiving, from the computing device, information about an installation event associated with a software application on the computing device, wherein the information includes: first data that uniquely identifies the software application, and second data that is based on the installation event, (3) utilizing the first data to identify, within a data structure, an entry that corresponds to the software application, wherein the entry stores at least one criterion for determining whether to take action on, or to disregard, the installation event, (4) comparing the second data against the at least one criterion, and (5) taking action on the installation event based on comparing the second data against the at least one criterion.

Yet another embodiment sets forth a method for managing software application installation events. According to some embodiments, the method can be implemented by a first software application management (SAM) framework implemented by a developer entity, and includes the steps of (1) distributing a software application to a computing device, wherein the software application is configured to communicate with a second SAM framework implemented on the computing device to enable the computing device to: detect an installation event associated with the software application on the computing device, (2) gather information about the installation event, wherein the information includes: first data that uniquely identifies the software application, and second data that is based on the installation event, and (3) provide the information to a management entity to cause the management entity to take action on, or to disregard, the installation event, based on whether the installation event satisfies at least one criterion, and (4) receiving, from the management entity, an informational package that is based at least in part on the installation event.

Other embodiments include a non-transitory computer readable medium configured to store instructions that, when executed by a processor included in a computing device, cause the computing device to implement the methods and techniques described in this disclosure. Yet other embodiments include hardware computing devices that include processors that can be configured to cause the hardware computing devices to implement the methods and techniques described in this disclosure.

Other aspects and advantages of the techniques will become apparent from the following detailed description taken in conjunction with the accompanying drawings which illustrate, by way of example, the principles of the described embodiments.

This Summary is provided merely for purposes of summarizing some example embodiments so as to provide a basic understanding of some aspects of the subject matter described herein. Accordingly, it will be appreciated that the above-described features are merely examples and should not be construed to narrow the scope of the subject matter described herein in any way. Other features, aspects, and advantages of the subject matter described herein will become apparent from the following Detailed Description, Figures, and Claims.

### BRIEF DESCRIPTION OF THE DRAWINGS

The included drawings are for illustrative purposes and serve only to provide examples of possible structures and arrangements for the disclosed apparatuses and methods for providing wireless computing devices. These drawings in no way limit any changes in form and detail that may be made to the embodiments by one skilled in the art without departing from the scope of the embodiments. The embodiments will be readily understood by the following detailed description in conjunction with the accompanying drawings, wherein like reference numerals designate like structural elements.
FIG. 1 illustrates a block diagram of different components of a system for implementing the various techniques described herein, according to some embodiments.
FIGS. 2-4 illustrate different methods for managing software application installation events, according to some embodiments.
FIG. 5 illustrates a detailed view of a representative computing device that can be used to implement various techniques described herein, according to some embodiments.

### DETAILED DESCRIPTION

Representative applications of methods and apparatuses according to the present application are described in this section. These examples are being provided solely to add context and aid in the understanding of the described embodiments. It will thus be apparent to one skilled in the art that the described embodiments may be practiced without some or all of these specific details. In other instances, well known process steps have not been described in detail in order to avoid unnecessarily obscuring the described embodiments. Other applications are possible, such that the following examples should not be taken as limiting.

In the following detailed description, references are made to the accompanying drawings, which form a part of the description, and in which are shown, by way of illustration, specific embodiments in accordance with the described embodiments. Although these embodiments are described in sufficient detail to enable one skilled in the art to practice the described embodiments, it is understood that these examples are not limiting; such that other embodiments may be used, and changes may be made without departing from the scope of the described embodiments.

The described embodiments set forth techniques for implementing a software application management (SAM) framework. In particular, the techniques involve managing software application installation events across computing devices using the SAM framework.

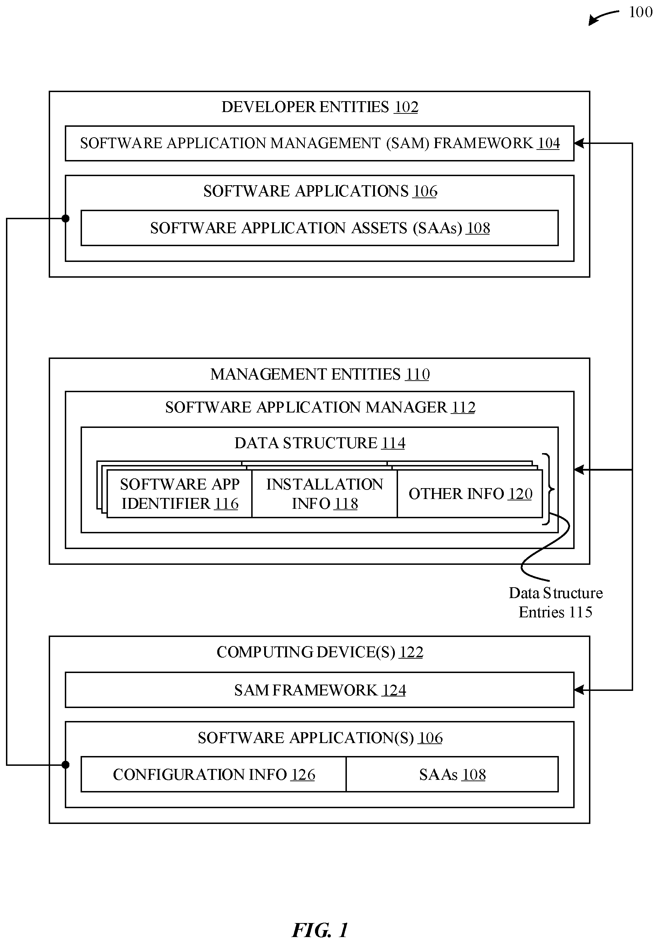

These and other embodiments are discussed below with reference to FIGS. 1-6; however, those skilled in the art will readily appreciate that the detailed description given herein with respect to these figures is for explanatory purposes only and should not be construed as limiting.

FIG. 1 illustrates a block diagram of different components of system 100 for implementing the various techniques described herein, according to some embodiments. As shown in FIG. 1, the system 100 can include one or more developer entities 102, one or more management entities 110, and one or more computing devices 122. Other devices, entities, etc., can be included in the system 100, without departing from the scope of this disclosure.

According to some embodiments, a given developer entity 102 can collectively represent one or more parties involved in the development, management, publication, etc., of one or more software applications 106. For example, the developer entity 102 can collectively represent a company, individual developers, and so on, as well as one or more computing devices that are utilized by such parties. According to some embodiments, and as shown in FIG. 1, each software application 106 can be comprised of one or more software application assets 108. According to some embodiments, the software application assets 108 represent components of which the software application 106 is comprised, such as code directories, source code files, executable files, configuration files, library files, database files, resource files, markup and stylesheet files, script files, configuration files, documentation files, log files, temporary files, binary data files, license files, version control files, and the like. It is noted that the foregoing examples are not meant to be limiting, and that the software application assets 108 can include any amount, type, form, etc., of software application component, at any level of granularity, consistent with the scope of this disclosure.

As shown in FIG. 1, each developer entity 102 can implement a software application management (SAM) framework 104 that enables the developer entity 102 to interface with one or more management entities 110. For example, as described in greater detail herein, the SAM framework 104 can enable the developer entity 102 to provide software applications 106 to a given management entity 110. The SAM framework 104 can also enable the developer entity 102 to provide, access, etc., information associated with software application 106 installation events on computing devices 122, information associated with transactions that take place in accordance with the installation events (and/or other conditions being satisfied), and so on. The SAM framework 104 can also enable the developer entity 102 to interface with software applications 106 on computing devices 122. For example, the SAM framework 104 can provide information to, receive information from, etc., the software applications 106 to facilitate useful features. It is noted that the foregoing examples are not meant to be limiting, and that the SAM framework 104 can be configured to carry out any amount, type, form, etc., of operation(s), at any level of granularity, consistent with the scope of this disclosure.

According to some embodiments, software applications 106 can be installed onto the computing devices 122 through virtual software application stores (not illustrated in FIG. 1) that manage the software applications 106, as well as the distribution, installation, etc., thereof, onto the computing devices 122. According to some embodiments, any of the management entities 110 can implement a respective virtual software application store through which computing devices 122 can access software applications 106. Under another example approach, software applications 106 can be installed onto computing devices 122 independent from virtual software application stores (referred to herein as "independently-installed software applications 106"). For example, software applications 106 can be downloaded (e.g., from a website, the SAM framework 104 of a developer entity 102, etc.) and installed onto the computing devices 122 without requiring direct interaction with virtual application stores.

As described herein, a particular one of the management entities 110 can be configured to effectively maintain a library of software applications 106 that are produced by the developer entities 102 (regardless of whether the management entity 110 implements a virtual software application store for the software applications 106). According to some embodiments, the management entity 110 can manage user accounts that are associated with (e.g., logged-on to) the computing devices 122. In this regard, the user accounts effectively associate the management entity 110 with the computing devices 122, enable the management entity 110 to communicate with the computing devices 122, and so on. According to some embodiments, the management entity 110 can also manage developer accounts associated with the developer entities 102. The developer accounts can enable, for example, developer entities 102 to access different services provided by the management entity 110, and vice-versa.

According to some embodiments, the management entity 110 can obtain software applications 106 using any number of different approaches. Under one approach, developer entities 102 can provide software applications 106 to the management entity 110, e.g., when developer entities 102 submit their applications to be distributed / installed via a virtual software application store implemented by the management entity 110. In another example, software applications 106 can be obtained through a service managed by the management entity 110 that enables developer entities 102 to provide, to the management entity 110, software applications 106 that are planned for installation (on computing devices 122) independent from virtual software application stores. Under another approach, users of computing devices 122 can opt-in to provide independently-installed software applications 106 (or yet-to-be installed software applications 106) to the management entity 110. Under yet another approach, the management entity 110 can crawl the Internet to obtain software applications 106. It is noted that the foregoing examples are not meant to be limiting, and that software applications 106 can be obtained using any approach, consistent with the scope of this disclosure.

As a brief aside, it is noted that the management entity 110, in conjunction with obtaining a given software application 106, can implement any number of techniques for identifying, generating, providing, etc., information that may be relevant to the developer entities 102, users of the computing devices 122, etc.-e.g., information about malicious features that were detected, information about vulnerabilities that were detected, and so on. In this manner, users can utilize the software applications 106 as they see fit, developer entities 102 can make efforts to mitigate the detected issues, and so on.

According to some embodiments, a software application manager 112 implemented by the management entity 110 can implement a data structure 114 that includes data structure entries 115. According to some embodiments, a respective data structure entry 115 can be established for each software application 106 that is known to the management entity 110. In this regard, and as shown in FIG. 1, a given data structure entry 115 can include a software application identifier 116 that corresponds to the software application 106, installation information 118 that corresponds to the software application 106, as well as other information 120. It is noted that any number of data structure entries 115 can be managed for a given software application 106, consistent with the scope of this disclosure. For example, under one approach, a single data structure entry 115 can be managed for a software application 106 for which there are several versions, where relevant information for each version of the software application 106 is managed within the data structure entry 115. Under another example approach, a data structure entry 115 can be managed for each version of the software application 106. Again, these example approaches are not meant to be limiting. It is additionally noted that a given data structure entry 115 can store a copy of the software application 106, a reference to the software application 106 (e.g., stored on a storage system accessible to the software application manager 112), and so on.

According to some embodiments, the software application identifier 116 can take the form of any information that can be used to uniquely identify the software application 106. For example, the software application identifier 116 can store a hexadecimal value that uniquely identifies the software application 106. In another example, any aspect of the software application 106-e.g., one or more of the software application assets 108 of which the software application 106 is comprised-can be provided to an indexing hash function to generate a hash value for the software application asset 108. In turn, the hash value can be used to form the software application identifier 116. It is noted that the foregoing examples are not meant to be limiting, and that the software application identifier 116 can include, be derived from, etc., any amount, type, form, etc., of information, at any level of granularity, consistent with the scope of this disclosure. In any case, and as described in greater detail herein, a given installation event received by the software application manager 112 can include a software application identifier 116, thereby enabling the relevant data structure entry 115 to be created, looked-up (to be updated), and the like.

According to some embodiments, and as described herein, the software application manager 112 can be configured to interface with SAM frameworks 124 implemented on computing devices 122 to transmit and receive information. In particular, the software application manager 112 can be configured to receive, from SAM frameworks 124 implemented on computing devices 122, information pertaining to installation events associated with software applications 106 on the computing devices 122. In turn, and as described in greater detail herein, the software application manager 112 can take actions on installation events when certain criteria are satisfied.

To effectively manage, for a given software application 106, the installation events discussed herein, the installation information 118 can include any amount, type, form, etc., of information relating to installation events associated with the software application 106 that take place across different computing devices 122. For example, the installation information 118 can include a data structure that includes an entry for each installation event. A given entry for an installation event can include, for example, timestamp information (e.g., a time / date at which the installation event took place), installation event category information (e.g., a type of the installation event), user account information (e.g., a unique identifier of a user account involved in the installation event), computing device 122 information (e.g., a unique identifier of the computing device 122 on which the installation event took place), installation facilitation information (e.g., whether the installation event was performed using a virtual software application store, using an independent approach, etc.), and so on. It is noted that the foregoing examples are not meant to be limiting, and that the installation event information can include any amount, type, form, etc., of information, at any level of granularity, consistent with the scope of this disclosure.

According to some embodiments, the installation event categories for a given installation event of a software application 106 on a computing device 122 can include (1) an installation of the software application 106 for a first time relative to a user account associated with the computing device 122, (2) a transfer installation of the software application 106 that involves removing the software application 106 from a different computing device 122 associated with the user account, (3) an update to the software application 106, (4) an uninstallation of the software application 106, (5) a reinstallation of the software application 106, (6) a partial offload of the software application 106 from the computing device 122, (6) a reestablishment of the software application 106 onto the computing device 122 after the software application 106 has been partially offloaded from the computing device 122, (7) an automatic installation of the software application 106 as a result of the software application 106 being installed on another computing device 122 associated with the user account, and the like. It is noted that the foregoing examples are not meant to be limiting, and that the installation events can include any amount, type, form, etc., of installation event(s), at any level of granularity, consistent with the scope of this disclosure.

According to some embodiments, the other information 120 can include any amount, type, form, etc., of information relating to the software application 106, such as the developer entity 102 associated with the software application 106, performance metrics associated with the software application 106, and the like. According to some embodiments, the other information 120 can include criteria that can be used to determine when the software application manager 112 should take action in response to installation events that take place in association with the software application 106. According to some embodiments, the criteria can include (1) time periods that correspond to installation events, (2) versions of the software application 106 that correspond to the installation events, (3) deployment environments associated with the installation events, where the deployment environments include development environments, test environments, production environments, or some combination thereof, (4) business environments associated with the installation events, where the business environments include enterprise environments, education environments, consumer environments, or some combination thereof, (5) sources from which data contents to perform the installation events are received, where the sources include virtual software application stores, websites associated with developer entities 102 associated with the software application 106, websites associated with distributor entities of the software application 106, or some combination thereof, (6) operating systems on which the installation events are performed, (7) locales associated with the installation events, where the locales are defined by a plurality of unique geofences, and the like. It is noted that the foregoing examples are not meant to be limiting, and that the criteria can include any amount, type, form, etc., of criterion(s), at any level of granularity, consistent with the scope of this disclosure.

According to some embodiments, the software application manager 112 can analyze information stored in the data structure 114 to determine when actions, if any, should be taken. According to some embodiments, taking action on a given installation event comprises performing at least one transaction that is based at least in part on the given installation event. Additionally, the software application manager 112 can be configured to aggregate information to identify when reports should be processed / provided to developer entities 102. In particular, the software application manager 112 can interface with developer entities 102 (e.g., via their respective SAM frameworks 104) to convey the transactions, reports, etc., to the developer entities 102. The software application manager 112 can also receive requests for information from developer entities 102 (e.g., via their respective SAM frameworks 104) and provide relevant information in response to the requests.

It should be understood that the various components of the computing devices illustrated in FIG. 1 are presented at a high level in the interest of simplification. For example, although not illustrated in FIG. 1, it should be appreciated that the various computing devices can include common hardware / software components that enable the above-described software entities to be implemented. For example, each of the computing devices can include one or more processors that, in conjunction with one or more volatile memories (e.g., a dynamic random-access memory (DRAM)) and one or more storage devices (e.g., hard drives, solid-state drives (SSDs), etc.), enable the various software entities described herein to be executed. Moreover, each of the computing devices can include communications components that enable the computing devices to transmit information between one another.

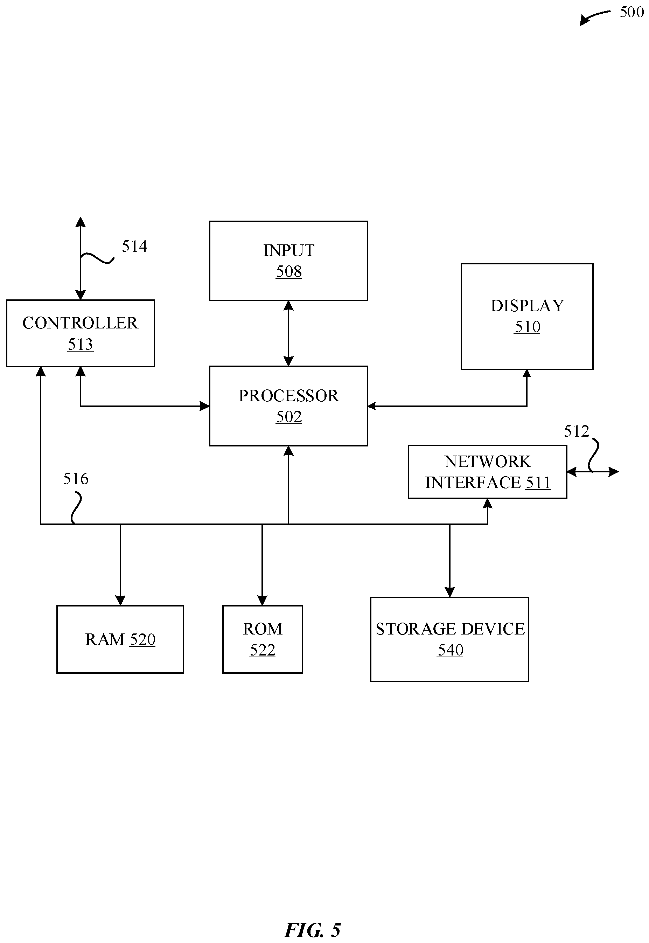

A more detailed explanation of these hardware components is provided below in conjunction with FIG. 5. It should additionally be understood that the computing devices can include additional entities that enable the implementation of the various techniques described herein without departing from the scope of this disclosure. It should additionally be understood that the entities described herein can be combined or split into additional entities without departing from the scope of this disclosure. It should further be understood that the various entities described herein can be implemented using software-based or hardware-based approaches without departing from the scope of this disclosure.

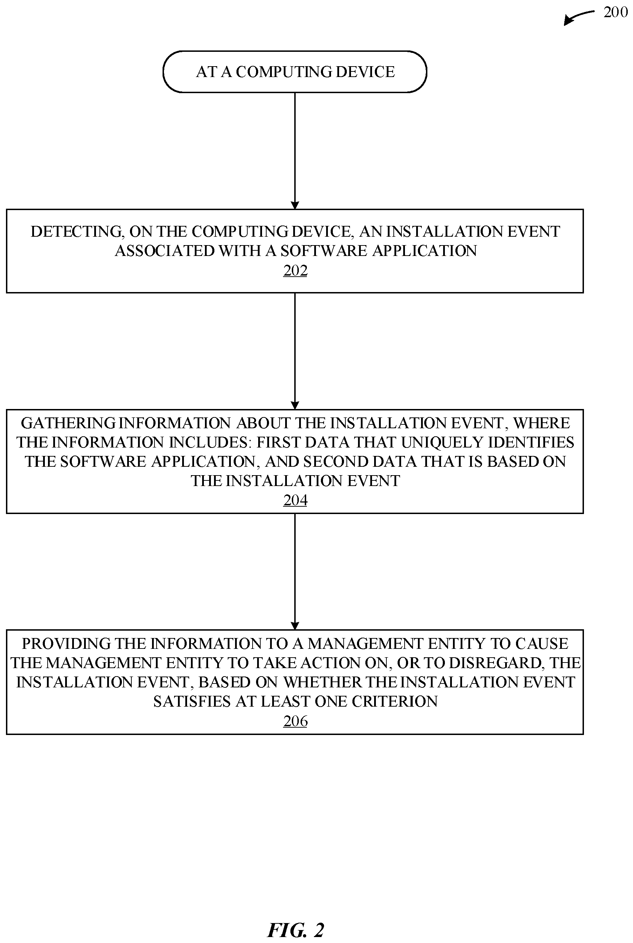

Accordingly, FIG. 1 provides an overview of the manner in which the system 100 can implement the various techniques described herein, according to some embodiments. A more detailed breakdown of the manner in which these techniques can be implemented will now be provided below in conjunction with FIGS. 2-5.

FIG. 2 illustrates a method 200 for managing software application installation events, according to some embodiments. As shown in FIG. 2, the method 200 begins at step 202, and involves the computing device 122 detecting an installation event associated with a software application 106. According to some embodiments, the SAM framework 124 implemented on the computing device 122 can be configured to monitor different aspects of an operating system (OS) executing on the computing device 122 to identify the installation event. For example, the SAM framework 124 can monitor application programming interface (API) calls made by an installer associated with the computing device 122, changes to one or more file systems implemented on the OS, and so on, to effectively identify the installation event. It is noted that the foregoing examples are not meant to be limiting, and that the SAM framework 124 can implement any approach that is effective for identifying when installation events take place on the computing device 122, for identifying, analyzing, etc., information associated with the installation events, and so on.

Step 204 involves the computing device 122 gathering information about the installation event, where the information includes: first data that uniquely identifies the software application, and second data that is based on the installation event.

According to some embodiments, the first data can represent a software application identifier 116 for the software application 106. The SAM framework 124 can obtain the software application identifier 116, for example, by issuing a request to the software application 106, a file system, the OS of the computing device 122, etc., for the software application identifier 116, by reading configuration information 126 associated with the software application 106, or the like. In another example, the SAM framework 124 can derive the software application identifier 116 from software application assets 108 of which the software application 106 is composed (e.g., using the same indexing hash function / approach described above), and so on. In this regard, one or more of the management entities 110 described herein-e.g., the management entity 110 that maintains a library of software applications 106 that are installed across the computing devices 122-includes at least one data structure entry 115 that references the same software application identifier 116 (if, at some point in time, management entity 110 obtained the software application 106 (or a notice thereof) and added the software application 106 to the library using the same indexing techniques).

According to some embodiments, the second data can include any amount, type, form, etc., of information associated with the installation event. For example, the second data can identify whether the installation event constituted an installation of the software application 106 for a first time on the computing device 122, a transfer installation of the software application 106 (that involved removing the software application 106 from a different computing device 122 associated with the computing device 122 (e.g., associated by way of a shared user account)), an update to the software application 106, an uninstallation of the software application 106, a reinstallation of the software application 106 (e.g., after an uninstallation was performed), a partial offload of the software application 106 (e.g., where at least some data of the software application 106 is removed from the computing device 122 and can be recovered at a later time (e.g., from a backup storage service)), a reestablishment of the software application 106 on the computing device 122 after the software application 106 has been partially offloaded from the computing device 122, an automatic installation of the software application 106 as a result of the software application 106 being installed on another computing device 122 (e.g., by way of the aforementioned shared user account), and so on.

Additionally, the second data can include additional information that can be utilized to analyze the installation event against the criteria described herein. For example, the second data can include version information associated with the software application 106, deployment environment information associated with the installation event (e.g., whether the installation event occurred under a development environment, a test environment, a production environment, etc.), business environment information associated with the installation event (e.g., whether the installation event occurred under an enterprise environment, an education environment, a consumer environment, etc.), information about one or more sources from which data contents used to perform the installation event-e.g., the software application 106 itself, an update to the software application 106, a software application asset 108 of the software application 106, etc.- are received (e.g., information about one or more virtual software application stores, one or more websites associated with developer entities 102 associated with the software application 106, one or more websites associated with distributor entities of the software application 106, etc., from which the data contents were received), OS information associated with the computing device 122 (e.g., a name, version, etc., of the OS under which the installation event occurred), locale information (e.g., a Global Positioning Satellite (GPS) position) associated with the installation event (e.g., a location of the computing device 122 when the installation event occurred), and so on.

It is noted that the foregoing examples are not meant to be limiting, and that the second data can include any amount, type, form, etc., of information pertaining to the installation event, at any level of granularity, consistent with the scope of this disclosure.

Step 206 involves the computing device 122 providing the information to a management entity to cause the management entity to take action on, or to disregard, the installation event, based on whether the installation event satisfies at least one criterion. According to some embodiments, the SAM framework 124 provides the information to the software application manager 112 using at least one secure communication channel that is established between the SAM framework 124 and the software application manager 112. According to some embodiments, the SAM framework 124 can provide, to the software application manager 112, additional information (e.g., credentials, digital signatures, challenges, etc.) that enables the software application manager 112 to verify the computing device 122, the user account logged in to the computing device 122, and so on. Such verifications can beneficially help mitigate scenarios where entities (malicious or otherwise) attempt to report installation events that did not actually occur.

According to some embodiments, when the software application manager 112 receives the information from the SAM framework 124, the software application manager 112 can utilize the first data (i.e., the software application identifier 116) to identify the data structure entry 115 that corresponds to the software application 106. In turn, the software application manager 112 can update the installation information 118 to reflect the second data (i.e., the information about the installation event). This can include, for example, creating, within a data structure stored within the installation information 118, a new entry that corresponds to the installation event, and that stores information included in the second data, derived from the second data, etc., as well as any other information that is relevant.

Additionally, the software application manager 112 can be configured to determine whether any action(s) should be taken in association with the installation event. As described herein, the software application manager 112 can analyze the installation event itself, other installation events associated with the software application 106, one or more developer entities 102 associated with the software application 106, one or more virtual software application stores associated with the software application 106, and so on, against different criteria. It is noted that the foregoing examples are not meant to be limiting, and that the information analyzed can include any amount, type, form, etc., of information about any of the devices, entities, software applications, installation events, etc., at any level of granularity, consistent with the scope of this disclosure.

According to some embodiments, the criteria can include (1) time periods that correspond to installation events, (2) versions of the software application 106 that correspond to the installation events, (3) the deployment environments associated with the installation events (e.g., development environments, test environments, production environments, etc.), (4) the business environments associated with the installation events (e.g., enterprise environments, education environments, consumer environments, etc.), (5) the sources from which data contents to perform the installation events were received (e.g., virtual software application stores, websites associated with developer entities 102, websites associated with distributor entities, etc.), (6) operating systems (Oss) on which the installation events were performed, (7) locales associated with the installation events (e.g., unique geofences where the installation events took place), and the like. It is noted that the foregoing examples are not meant to be limiting, and that the criteria can include any amount, type, form, etc., of criterion(s), at any level of granularity, consistent with the scope of this disclosure.

Accordingly, the software application manager 112 can effectively determine, e.g., based on the aforementioned information and the criteria, whether any action(s) should be taken in association with the installation event. According to some embodiments, the software application manager 112 can implement a set of rules that indicate the actions that should be taken. For example, one or more rules may indicate that, when a threshold number of a particular type of installation events for a software application 106 take place within a given time period, then a developer entity 102 should be engaged in one or more transactions. The transactions can include, for example, the developer entity 102 paying a fee to the management entity 110. The time period can reset when appropriate, e.g., when the time period lapses, when one or more conditions associated with the developer entity 102, the software application 106, the installation events, etc., are satisfied, and so on. It is noted that the foregoing examples are not meant to be limiting, and that the management entity 110 can take any amount, type, form, etc., of action(s), at any level of granularity and where / when appropriate, consistent with the scope of this disclosure.

Additionally, it is noted that the software application manager 112 can perform the aforementioned analyses on a periodic, conditional, etc., basis, rather than on a per-installation event basis. For example, the software application manager 112 can be configured to batch-process / analyze installation events for a given software application 106 on a daily, weekly, monthly, etc., basis, which can improve efficiency. Additionally, it is noted that the software application manager 112 can be configured to generate reports when the aforementioned analyses, transactions, etc., are implemented, and provide the reports to the relevant entities. The reports can include, for example, information pertaining to the installation events, information pertaining to the transactions, and/or any other information that may be relevant.

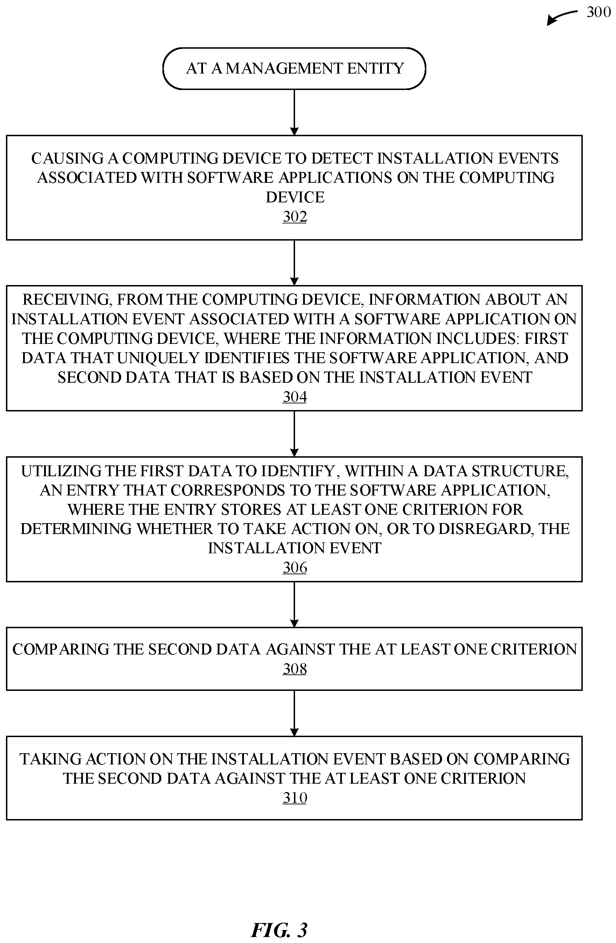

FIG. 3 illustrates a method 300 for managing software application installation events, according to some embodiments. As shown in FIG. 3, the method 300 begins at step 302, and involves the management entity 110 causing a computing device to detect installation events associated with software applications on the computing device (e.g., in accordance with the techniques described herein). Step 304 involves the management entity 110 receiving, from the computing device, information about an installation event associated with a software application on the computing device, where the information includes: first data that uniquely identifies the software application, and second data that is based on the installation event (e.g., in accordance with the techniques described herein).

Step 306 involves the management entity 110 utilizing the first data to identify, within a data structure, an entry that corresponds to the software application, where the entry stores at least one criterion for determining whether to take action on, or to disregard, the installation event (e.g., in accordance with the techniques described herein). Step 308 involves the management entity 110 comparing the second data against the at least one criterion (e.g., in accordance with the techniques described herein). Step 310 involves the management entity 110 taking action on the installation event based on comparing the second data against the at least one criterion (e.g., in accordance with the techniques described herein).

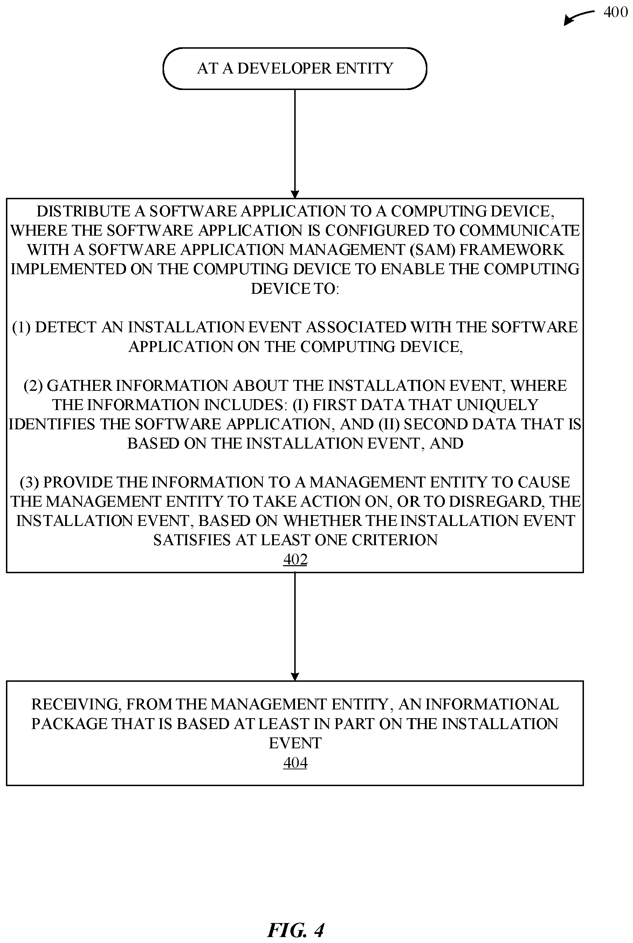

FIG.4 illustrates a method 400 for managing software application installation events, according to some embodiments. As shown in FIG.4, the method 400 begins at step 402, and involves the developer entity 102 distributing a software application to a computing device, where the software application is configured to communicate with a software application management (SAM) framework implemented on the computing device to enable the computing device to: (1) detect an installation event associated with the software application on the computing device, (2) gather information about the installation event, where the information includes: (i) first data that uniquely identifies the software application, and (ii) second data that is based on the installation event, and (3) provide the information to a management entity to cause the management entity to take action on, or to disregard, the installation event, based on whether the installation event satisfies at least one criterion (e.g., in accordance with the techniques described herein). Step 404 involves the developer entity 102 receiving, from the management entity, an informational package (e.g., a report) that is based at least in part on the installation event (e.g., in accordance with the techniques described herein).

FIG. 5 illustrates a detailed view of a computing device 500 that can be used to implement the various components described herein, according to some embodiments. In particular, the detailed view illustrates various components that can be included in the computing devices 122 of FIG. 1, as well as computing devices operated by the developer entities 102 and the management entity 110 of FIG. 1.

As shown in FIG. 5, the computing device 500 can include a processor 502 that represents a microprocessor or controller for controlling the overall operation of computing device 500. The computing device 500 can also include a user input device 508 that allows a user of the computing device 500 to interact with the computing device 500. For example, the user input device 508 can take a variety of forms, such as a button, keypad, dial, touch screen, audio input interface, visual/image capture input interface, input in the form of sensor data, etc. Furthermore, the computing device 500 can include a display 510 (screen display) that can be controlled by the processor 502 to display information to the user. A data bus 516 can facilitate data transfer between at least a storage device 540, the processor 502, and a controller 513. The controller 513 can be used to interface with and control different equipment through an equipment control bus 514. The computing device 500 can also include a network/bus interface 511 that couples to a data link 512. In the case of a wireless connection, the network/bus interface 511 can include a wireless transceiver.

The computing device 500 also includes a storage device 540, which can comprise a single disk or a plurality of disks (e.g., SSDs), and includes a storage management module that manages one or more partitions within the storage device 540. In some embodiments, storage device 540 can include flash memory, semiconductor (solid state) memory or the like. The computing device 500 can also include a Random-Access Memory (RAM) 520 and a Read-Only Memory (ROM) 522. The ROM 522 can store programs, utilities, or processes to be executed in a non-volatile manner. The RAM 520 can provide volatile data storage, and stores instructions related to the operation of the computing devices described herein.

The various aspects, embodiments, implementations, or features of the described embodiments can be used separately or in any combination. Various aspects of the described embodiments can be implemented by software, hardware or a combination of hardware and software. The described embodiments can also be embodied as computer readable code on a computer readable medium. The computer readable medium is any data storage device that can store data that can be read by a computer system. Examples of the computer readable medium include read-only memory, random-access memory, CD-ROMs, DVDs, magnetic tape, hard disk drives, solid state drives, and optical data storage devices. The computer readable medium can also be distributed over network-coupled computer systems so that the computer readable code is stored and executed in a distributed fashion.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of specific embodiments are presented for purposes of illustration and description. They are not intended to be exhaustive or to limit the described embodiments to the precise forms disclosed. It will be apparent to one of ordinary skill in the art that many modifications and variations are possible in view of the above teachings.

As described herein, one aspect of the present technology is the gathering and use of data available from various sources to improve user experiences. The present disclosure contemplates that in some instances, this gathered data may include personal information data that uniquely identifies or can be used to contact or locate a specific person. Such personal information data can include demographics data, location-based data, telephone numbers, email addresses, home addresses, data or records relating to a user's health or level of fitness (e.g., vital signs measurements, medication information, exercise information), date of birth, smart home activity, or any other identifying or personal information. The present disclosure recognizes that the use of such personal information data, in the present technology, can be used to the benefit of users.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, the present technology can be configured to allow users to select to "opt in" or "opt out" of participation in the collection of personal information data during registration for services or anytime thereafter. In another example, users can select to provide only certain types of data that contribute to the techniques described herein. In addition to providing "opt in" and "opt out" options, the present disclosure contemplates providing notifications relating to the access or use of personal information. For instance, a user may be notified that their personal information data may be accessed and then reminded again just before personal information data is accessed.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

## Claims

1. A method for managing software application (106) installation events, the method comprising, by a software application management, SAM, framework (124) implemented on a computing device (122, 500):
detecting (202), on the computing device (122, 500), an installation event associated with a software application (106), wherein the installation event includes at least one of:
an installation of the software application (106) for a first time relative to a user account associated with the computing device (122, 500);
a transfer installation of the software application (106) that involves removing the software application (106) from a different computing device associated with the user account;
an update to the software application (106);
an uninstallation of the software application (106);
a reinstallation of the software application (106);
a partial offload of the software application (106);
a reestablishment of the software application (106) after the software application (106) has been partially offloaded from the computing device (122, 500); or
an automatic installation of the software application (106) as a result of the software application (106) being installed on another computing device (122, 500) associated with the user account;
gathering (204) information about the installation event, wherein the information includes:
first data that uniquely identifies the software application (106), wherein the first data is based on code directories, source code files, executable files, configuration files, library files, database files, resource files, markup and stylesheet files, script files, configuration files, documentation files, log files, temporary files, binary data files, license files, version control files; and
second data that is based on the installation event; and
providing (206) the information to a management entity (110) to cause the management entity (110) to take action on the installation event, based on whether the installation event satisfies at least one criterion, wherein the at least one criterion is selected from:
time periods that correspond to the installation event;
versions of the software application (106) that correspond to the installation event;
deployment environments associated with the installation event,
wherein the deployment environments include development environments, test environments, production environments, or some combination thereof;
business environments associated with the installation event, wherein the business environments include enterprise environments, education environments, consumer environments, or some combination thereof;
sources from which data contents to perform the installation event is received, wherein the sources include virtual software application stores, websites associated with developer entities (102) associated with the software application (106), websites associated with distributor entities of the software application (106), or some combination thereof;
operating systems on which the installation event is performed;
locales associated with the installation event, wherein the locales are
defined by a plurality of unique geofences;
wherein taking action on a given installation event comprises:
performing at least one transaction that is based at least in part on the given installation event,
wherein the at least one transaction involves providing, to a developer entity (102) associated with the software application (106), or to a virtual software application store associated with the software application (106), an informational package that is based at least in part on the at least one transaction, wherein the informational package is configured to trigger, at the recipient, an automated security review, compliance check or update to a management dashboard.

2. The method of claim 1, wherein the installation event is performed:
independent from the virtual software application store, or
by interfacing with the virtual software application store.

3. The method of claim 1, wherein, when a given time period lapses, a new time period commences and affects whether actions are taken on supplemental installation events.

4. A computing device (122, 500) configured to manage software application (106) installation events, the computing device (122, 500) comprising:
at least one processor; and
at least one memory storing instructions that, when executed by the at least one processor, cause the computing device (122, 500) to carry out steps that include:
detecting (202), on the computing device (122, 500), an installation event associated with a software application (106);
gathering (204) information about the installation event, wherein the information includes:
first data that uniquely identifies the software application (106), wherein the first data is based on code directories, source code files, executable files, configuration files, library files, database files, resource files, markup and stylesheet files, script files, configuration files, documentation files, log files, temporary files, binary data files, license files, version control files; and
second data that is based on the installation event, wherein the installation event includes at least one of:
an installation of the software application (106) for a first time relative to a user account associated with the computing device (122, 500);
a transfer installation of the software application (106) that involves removing the software application (106) from a different computing device associated with the user account;
an update to the software application (106);
an uninstallation of the software application (106);
a reinstallation of the software application (106);
a partial offload of the software application (106);
a reestablishment of the software application (106) after the software application (106) has been partially offloaded from the computing device (122, 500); or
an automatic installation of the software application (106) as a result of the software application (106) being installed on another computing device (122, 500) associated with the user account;
providing (206) the information to a management entity (110) to cause the management entity (110) to take action on the installation event, based on whether the installation event satisfies at least one criterion, wherein the at least one criterion is selected from:
time periods that correspond to the installation event;
versions of the software application (106) that correspond to the installation event;
deployment environments associated with the installation event,
wherein the deployment environments include development environments, test environments, production environments, or some combination thereof;
business environments associated with the installation event, wherein the business environments include enterprise environments, education environments, consumer environments, or some combination thereof;
sources from which data contents to perform the installation event is received, wherein the sources include virtual software application stores, websites associated with developer entities (102) associated with the software application (106), websites associated with distributor entities of the software application (106), or some combination thereof;
operating systems on which the installation event is performed;
locales associated with the installation event, wherein the locales are
defined by a plurality of unique geofences;
wherein taking action on a given installation event comprises:
performing at least one transaction that is based at least in part on the given installation event,
wherein the at least one transaction involves providing, to a developer entity (102) associated with the software application (106), or to a virtual software application store associated with the software application (106), an informational package that is based at least in part on the at least one transaction, wherein the informational package is configured to trigger, at the recipient, an automated security review, compliance check or update to a management dashboard.

5. The computing device (122, 500) of claim 4, wherein the installation event is performed:
independent from the virtual software application store, or
by interfacing with the virtual software application store.

6. The computing device (122, 500) of claim 4, wherein, when a given time period lapses, a new time period commences and affects whether actions are taken on supplemental installation events.

## Patentansprüche

1. Verfahren zum Verwalten von Installationsereignissen einer Softwareanwendung (106), wobei das Verfahren durch ein Framework (124) zur Softwareanwendungsverwaltung, SAM, das auf einer Rechenvorrichtung (122, 500) implementiert ist, Folgendes umfasst:
Erkennen (202), auf der Rechenvorrichtung (122, 500), eines Installationsereignisses, das einer Softwareanwendung (106) zugeordnet ist, wobei das Installationsereignis mindestens eines von Folgendem beinhaltet:
eine Installation der Softwareanwendung (106) zum ersten Mal in Bezug auf ein Benutzerkonto, das der Rechenvorrichtung (122, 500) zugeordnet ist;
eine Transferinstallation der Softwareanwendung (106), die das Entfernen der Softwareanwendung (106) von einer anderen Rechenvorrichtung, die dem Benutzerkonto zugeordnet ist, beinhaltet;
eine Aktualisierung der Softwareanwendung (106);
eine Deinstallation der Softwareanwendung (106);
eine Reinstallation der Softwareanwendung (106);
eine teilweise Auslagerung der Softwareanwendung (106);
eine Wiederherstellung der Softwareanwendung (106), nachdem die Softwareanwendung (106) teilweise von der Rechenvorrichtung (122, 500) ausgelagert wurde; oder
eine automatische Installation der Softwareanwendung (106) als Ergebnis der Installation der Softwareanwendung (106) auf einer anderen Rechenvorrichtung (122, 500), die dem Benutzerkonto zugeordnet ist;
Sammeln (204) von Informationen über das Installationsereignis, wobei die Informationen Folgendes beinhalten:
erste Daten, die die Softwareanwendung (106) eindeutig identifizieren, wobei die ersten Daten auf Codeverzeichnissen, Quellcodedateien, ausführbaren Dateien, Konfigurationsdateien, Bibliotheksdateien, Datenbankdateien, Ressourcendateien, Markup- und Stylesheet-Dateien, Skriptdateien, Konfigurationsdateien, Dokumentationsdateien, Protokolldateien, temporären Dateien, Binärdatendateien, Lizenzdateien, Versionskontrolldateien basieren; und
zweite Daten, die auf dem Installationsereignis basieren; und
Bereitstellen (206) der Informationen an eine Verwaltungsentität (110), um zu bewirken, dass die Verwaltungsentität (110) Maßnahmen bezüglich des Installationsereignisses ergreift, basierend darauf, ob das Installationsereignis mindestens ein Kriterium erfüllt, wobei das mindestens eine Kriterium ausgewählt ist aus:
Zeiträumen, die dem Installationsereignis entsprechen;
Versionen der Softwareanwendung (106), die dem Installationsereignis entsprechen;
Bereitstellungsumgebungen, die dem Installationsereignis zugeordnet sind, wobei die Bereitstellungsumgebungen Entwicklungsumgebungen, Testumgebungen, Produktionsumgebungen oder eine Kombination davon beinhalten;
Geschäftsumgebungen, die dem Installationsereignis zugeordnet sind, wobei die Geschäftsumgebungen Unternehmensumgebungen, Bildungsumgebungen, Verbraucherumgebungen oder eine Kombination davon beinhalten;
Quellen, von denen Dateninhalte zum Durchführen des Installationsereignisses empfangen werden, wobei die Quellen virtuelle Softwareanwendungsspeicher, Websites, die Entwicklerentitäten (102) zugeordnet sind, die der Softwareanwendung (106) zugeordnet sind, Websites, die Verteilerentitäten der Softwareanwendung (106) zugeordnet sind, oder eine Kombination davon beinhalten;
Betriebssysteme, auf denen das Installationsereignis durchgeführt wird;
Orte, die dem Installationsereignis zugeordnet sind, wobei die Orte
durch eine Vielzahl von eindeutigen Geofences definiert sind;
wobei das Ergreifen von Maßnahmen an einem gegebenen Installationsereignis Folgendes umfasst:
Durchführen mindestens einer Transaktion, die mindestens teilweise auf dem gegebenen Installationsereignis basiert,
wobei die mindestens eine Transaktion ein Bereitstellen eines Informationspakets, das mindestens teilweise auf der mindestens einen Transaktion basiert, an eine Entwicklerentität (102), die der Softwareanwendung (106) zugeordnet ist, oder an einen virtuellen Softwareanwendungsspeicher, der der Softwareanwendung (106) zugeordnet ist, beinhaltet, wobei das Informationspaket konfiguriert ist, um am Empfänger eine automatisierte Sicherheitsüberprüfung, Konformitätsprüfung oder Aktualisierung eines Verwaltungs-Dashboards auszulösen.

2. Verfahren nach Anspruch 1, wobei das Installationsereignis durchgeführt wird:
unabhängig von dem virtuellen Softwareanwendungsspeicher, oder
durch Verbinden mit dem virtuellen Softwareanwendungsspeicher.

3. Verfahren nach Anspruch 1, wobei, wenn ein gegebener Zeitraum abläuft, ein neuer Zeitraum beginnt und beeinflusst, ob Maßnahmen an zusätzlichen Installationsereignissen ergriffen werden.

4. Rechenvorrichtung (122, 500), die konfiguriert ist, um Installationsereignisse einer Softwareanwendung (106) zu verwalten, wobei die Rechenvorrichtung (122, 500) Folgendes umfasst:
mindestens einen Prozessor; und
mindestens einen Speicher, der Anweisungen speichert, die, wenn sie von dem mindestens einen Prozessor ausgeführt werden, die Rechenvorrichtung (122, 500) veranlassen, Schritte auszuführen, die Folgendes beinhalten:
Erkennen (202), auf der Rechenvorrichtung (122, 500), eines Installationsereignisses, das einer Softwareanwendung (106) zugeordnet ist;
Sammeln (204) von Informationen über das Installationsereignis, wobei die Informationen Folgendes beinhalten:
erste Daten, die die Softwareanwendung (106) eindeutig identifizieren, wobei die ersten Daten auf Codeverzeichnissen, Quellcodedateien, ausführbaren Dateien, Konfigurationsdateien, Bibliotheksdateien, Datenbankdateien, Ressourcendateien, Markup- und Stylesheet-Dateien, Skriptdateien, Konfigurationsdateien, Dokumentationsdateien, Protokolldateien, temporären Dateien, Binärdatendateien, Lizenzdateien, Versionskontrolldateien basieren; und
zweite Daten, die auf dem Installationsereignis basieren, wobei das Installationsereignis mindestens eines von Folgendem beinhaltet:
eine Installation der Softwareanwendung (106) zum ersten Mal in Bezug auf ein Benutzerkonto, das der Rechenvorrichtung (122, 500) zugeordnet ist;
eine Transferinstallation der Softwareanwendung (106), die das Entfernen der Softwareanwendung (106) von einer anderen Rechenvorrichtung, die dem Benutzerkonto zugeordnet ist, beinhaltet;
eine Aktualisierung der Softwareanwendung (106);
eine Deinstallation der Softwareanwendung (106);
eine Reinstallation der Softwareanwendung (106);
eine teilweise Auslagerung der Softwareanwendung (106);
eine Wiederherstellung der Softwareanwendung (106), nachdem die Softwareanwendung (106) teilweise von der Rechenvorrichtung (122, 500) ausgelagert wurde; oder
eine automatische Installation der Softwareanwendung (106) als Ergebnis der Installation der Softwareanwendung (106) auf einer anderen Rechenvorrichtung (122, 500), die dem Benutzerkonto zugeordnet ist;
Bereitstellen (206) der Informationen an eine Verwaltungsentität (110), um zu bewirken, dass die Verwaltungsentität (110) Maßnahmen bezüglich des Installationsereignisses ergreift, basierend darauf, ob das Installationsereignis mindestens ein Kriterium erfüllt, wobei das mindestens eine Kriterium ausgewählt ist aus:
Zeiträumen, die dem Installationsereignis entsprechen;
Versionen der Softwareanwendung (106), die dem Installationsereignis entsprechen;
Bereitstellungsumgebungen, die dem Installationsereignis zugeordnet sind, wobei die Bereitstellungsumgebungen Entwicklungsumgebungen, Testumgebungen, Produktionsumgebungen oder eine Kombination davon beinhalten;
Geschäftsumgebungen, die dem Installationsereignis zugeordnet sind, wobei die Geschäftsumgebungen Unternehmensumgebungen, Bildungsumgebungen, Verbraucherumgebungen oder eine Kombination davon beinhalten;
Quellen, von denen Dateninhalte zum Durchführen des Installationsereignisses empfangen werden, wobei die Quellen virtuelle Softwareanwendungsspeicher, Websites, die Entwicklerentitäten (102) zugeordnet sind, die der Softwareanwendung (106) zugeordnet sind, Websites, die Verteilerentitäten der Softwareanwendung (106) zugeordnet sind, oder eine Kombination davon beinhalten;
Betriebssysteme, auf denen das Installationsereignis durchgeführt wird;
Orte, die dem Installationsereignis zugeordnet sind, wobei die Orte durch eine Vielzahl von eindeutigen Geofences definiert sind;
wobei das Ergreifen von Maßnahmen an einem gegebenen Installationsereignis Folgendes umfasst:
Durchführen mindestens einer Transaktion, die mindestens teilweise auf dem gegebenen Installationsereignis basiert,
wobei die mindestens eine Transaktion ein Bereitstellen eines Informationspakets, das mindestens teilweise auf der mindestens einen Transaktion basiert, an eine Entwicklerentität (102), die der Softwareanwendung (106) zugeordnet ist, oder an einen virtuellen Softwareanwendungsspeicher, der der Softwareanwendung (106) zugeordnet ist, beinhaltet, wobei das Informationspaket konfiguriert ist, um am Empfänger eine automatisierte Sicherheitsüberprüfung, Konformitätsprüfung oder Aktualisierung eines Verwaltungs-Dashboards auszulösen.

5. Rechenvorrichtung (122, 500) nach Anspruch 4, wobei das Installationsereignis durchgeführt wird:
unabhängig von dem virtuellen Softwareanwendungsspeicher, oder
durch Verbinden mit dem virtuellen Softwareanwendungsspeicher.

6. Rechenvorrichtung (122, 500) nach Anspruch 4, wobei, wenn ein gegebener Zeitraum abläuft, ein neuer Zeitraum beginnt und beeinflusst, ob Maßnahmen an zusätzlichen Installationsereignissen ergriffen werden.

## Revendications

1. Un procédé de gestion d'événements d'installation d'application logicielle (106), le procédé comprenant, par un framework de gestion d'application logicielle, SAM, (124) implémenté sur un dispositif informatique (122, 500) :
la détection (202), sur le dispositif informatique (122, 500), d'un événement d'installation associé à une application logicielle (106), l'événement d'installation comprenant au moins l'une d'entre :
une installation de l'application logicielle (106) pour la première fois à l'égard d'un compte utilisateur associé au dispositif informatique (122, 500) ;
une installation de transfert de l'application logicielle (106) qui implique le retrait de l'application logicielle (106) d'un dispositif informatique différent associé au compte utilisateur ;
une mise à jour de l'application logicielle (106) ;
une désinstallation de l'application logicielle (106) ;
une réinstallation de l'application logicielle (106) ;
un délestage partiel de l'application logicielle (106) ;
un rétablissement de l'application logicielle (106) après que l'application logicielle (106) a été partiellement délestée du dispositif informatique (122, 500) ; ou
une installation automatique de l'application logicielle (106) du fait que l'application logicielle (106) a été installée sur un autre dispositif informatique (122, 500) associé au compte utilisateur ;
le recueil (204) d'informations relatives à l'événement d'installation, les informations comprenant :
des premières données qui identifient de façon unique l'application logicielle (106), les premières données étant basées sur des répertoires de code, des fichiers de code source, des fichiers d'exécutable, des fichiers de configuration, des fichiers de bibliothèque, des fichiers de base de données, des fichiers de ressource, des fichiers de marquage et de feuille de style, des fichiers de script, des fichiers de configuration, des fichiers de documentation, des fichiers de journalisation, des fichiers temporaires,
des fichiers de données binaires, des fichiers de licence, des fichiers de contrôle de version ; et
des secondes données qui sont basées sur l'événement d'installation; et
la délivrance des informations à une entité de gestion (110) pour faire en sorte que l'entité de gestion (110) exécute une action sur l'événement d'installation, sur la base du fait que l'événement d'installation vérifie ou non au moins un critère, l'au moins un critère étant choisi parmi :
des périodes temporelles qui correspondent à l'événement d'installation ;
des versions de l'application logicielle (106) qui correspondent à l'événement d'installation ;
des environnements de déploiement associés à l'événement d'installation, les environnements de déploiement comprenant des environnements de développement, des environnements de test, des environnements de production, ou certaines combinaisons des précédents ;
des environnements professionnels associés à l'événement d'information, les environnements professionnels comprenant des environnements d'entreprise, des environnements d'éducation, des environnements de consommateur, ou certaines combinaisons des précédents ;
des sources à partir desquelles sont reçus des contenus de données pour exécuter l'événement d'installation, les sources comprenant des magasins d'applications logicielles virtuelles, des sites web associés à des entités de développeur (102) associées à l'application logicielle (106), des sites web associés à des entités de distributeur de l'application logicielle (106), ou certaines combinaisons des précédents ;
des systèmes d'exploitation sur lesquels est exécuté l'événement d'installation ;
des lieux associés à l'événement d'installation, les lieux étant définis par une pluralité de confinements géographiques ;
dans lequel l'exécution d'une action sur un événement d'installation donné comprend :
l'exécution d'au moins une transaction qui est au moins en partie basée sur l'événement d'installation donné,
dans lequel l'au moins une transaction implique la délivrance, à une entité de développeur (102) associée à l'application logicielle (106), ou à un magasin d'applications logicielles virtuelles associées à l'application logicielle (106), d'un package d'informations qui est au moins en partie basé sur l'au moins une transaction, le package d'informations étant configuré pour déclencher, au niveau du destinataire, une vérification de conformité de revue de sécurité automatisée ou une mise à jour d'un tableau de bord de gestion.

2. Le procédé de la revendication 1, dans lequel l'événement d'installation est exécuté :
indépendamment du magasin d'applications logicielles virtuelles, ou
par interfaçage avec le magasin d'applications logicielles virtuelles.

3. Le procédé de la revendication 1, dans lequel, lorsqu'une période temporelle donnée s'est écoulée, une nouvelle période temporelle commence et affecte le fait d'exécuter ou non des actions sur des événements d'installation supplémentaires.

4. Un dispositif informatique (122, 500) configuré pour gérer des événements d'installation d'application logicielle (106), le dispositif informatique (122, 500) comprenant :
au moins un processeur ; et
au moins une mémoire stockant des instructions qui, lorsqu'elles sont exécutées par l'au moins un processeur, font en sorte que le dispositif informatique (122, 500) exécute des étapes qui comprennent :
la détection (202), sur le dispositif informatique (122, 500), d'un événement d'installation associé à une application logicielle (106) ;
le recueil (204) d'informations relatives à l'événement d'installation, les informations comprenant :
des premières données qui identifient de façon unique l'application logicielle (106), les premières données étant basées sur des répertoires de code, des fichiers de code source, des fichiers d'exécutable, des fichiers de configuration, des fichiers de bibliothèque, des fichiers de base de données, des fichiers de ressource, des fichiers de marquage et de feuille de style, des fichiers de script, des fichiers de configuration, des fichiers de documentation, des fichiers de journalisation, des fichiers temporaires, des fichiers de données binaires, des fichiers de licence, des fichiers de contrôle de version ; et
des secondes données qui sont basées sur l'événement d'installation, l'événement d'installation comprenant au moins l'une d'entre :
une installation de l'application logicielle (106) pour la première fois à l'égard d'un compte utilisateur associé au dispositif informatique (122, 500) ;
une installation de transfert de l'application logicielle (106) qui implique le retrait de l'application logicielle (106) d'un dispositif informatique différent associé au compte utilisateur ;
une mise à jour de l'application logicielle (106) ;
une désinstallation de l'application logicielle (106) ;
une réinstallation de l'application logicielle (106) ;
un délestage partiel de l'application logicielle (106) ;
un rétablissement de l'application logicielle (106) après que l'application logicielle (106) a été partiellement délestée du dispositif informatique (122, 500) ; ou
une installation automatique de l'application logicielle (106) du fait que l'application logicielle (106) a été installée sur un autre dispositif informatique (122, 500) associé au compte utilisateur ;
la délivrance des informations à une entité de gestion (110) pour faire en sorte que l'entité de gestion (110) exécute une action sur l'événement d'installation, sur la base du fait que l'événement d'installation vérifie ou non au moins un critère, l'au moins un critère étant choisi parmi :
des périodes temporelles qui correspondent à l'événement d'installation ;
des versions de l'application logicielle (106) qui correspondent à l'événement d'installation ;
des environnements de déploiement associés à l'événement d'installation, les environnements de déploiement comprenant des environnements de développement, des environnements de test, des environnements de production, ou certaines combinaisons des précédents ;
des environnements professionnels associés à l'événement d'information, les environnements professionnels comprenant des environnements d'entreprise, des environnements d'éducation, des environnements de consommateur, ou certaines combinaisons des précédents ;
des sources à partir desquelles sont reçus des contenus de données pour exécuter l'événement d'installation, les sources comprenant des magasins d'applications logicielles virtuelles, des sites web associés à des entités de développeur (102) associées à l'application logicielle (106), des sites web associés à des entités de distributeur de l'application logicielle (106), ou certaines combinaisons des précédents ;
des systèmes d'exploitation sur lesquels est exécuté l'événement d'installation ;
des lieux associés à l'événement d'installation, les lieux étant définis par une pluralité de confinements géographiques ;
dans lequel l'exécution d'une action sur un événement d'installation donné comprend :
l'exécution d'au moins une transaction qui est au moins en partie basée sur l'événement d'installation donné,
dans lequel l'au moins une transaction implique la délivrance, à une entité de développeur (102) associée à l'application logicielle (106), ou à un magasin d'applications logicielles virtuelles associées à l'application logicielle (106), d'un package d'informations qui est au moins en partie basé sur l'au moins une transaction, le package d'informations étant configuré pour déclencher, au niveau du destinataire, une vérification de conformité de revue de sécurité automatisée ou une mise à jour d'un tableau de bord de gestion.

5. Le dispositif informatique (122, 500) de la revendication 4, dans lequel l'événement d'installation est exécuté :
indépendamment du magasin d'applications logicielles virtuelles, ou
par interfaçage avec le magasin d'applications logicielles virtuelles.

6. Le dispositif informatique (122, 500) de la revendication 4, dans lequel, lorsqu'une période temporelle donnée s'est écoulée, une nouvelle période temporelle commence et affecte le fait d'exécuter ou non des actions sur des événements d'installation supplémentaires.
